# EUROPEAN PATENT SPECIFICATION

(11) **EP 2 857 757 B1**
(45) Date of publication and mention of the grant of the patent: **01.03.2017**
(21) Application number: 14187039.4
(22) Date of filing: 30.09.2014
(51) Int. Cl.: F24C 15/16, A47J 37/04

(54) **A cooking apparatus with a revolving grill**
Kochvorrichtung mit drehbarem Grill
Appareil de cuisson avec un gril rotatif

(30) Priority: 07.10.2013 TR 201311770
(43) Date of publication of application: 08.04.2015
(73) Proprietor: BSH Hausgeräte GmbH, 81739 München (DE)
(72) Inventor: Es, Nizami, 59510 TEKIRDAG (TR); Uygun, Ramazan, 59850 TEKIRDAG (TR); Özgündüz, Medayin, 59860 TEKIRDAG (TR)

(56) References cited:
- WO-A1-2007/031035
- CN-A- 102 028 416
- CN-U- 202 303 513
- US-A- 4 452 131
- US-A- 5 410 948
- US-A1- 2005 172 835
- US-A1- 2007 240 698
- US-B1- 6 418 835

## Description

The invention relates to cooking apparatuses equipped with a revolving grill situated within a cooking chamber.

In cooking apparatuses, foodstuffs placed on trays, grills and similar items are cooked by means of heating within a cooking chamber. In one of the cooking methods used, foodstuffs are revolved during the cooking using a revolving grill as described in application reference number TR200910058. According to this, the said invention concerns a cooking chamber defined by an inner carcass and an oven which contains a holder for foodstuff within the said cooking chamber, positioned in a manner which permits it to revolve on its own axis. The said oven includes a grill used as a holder for foodstuffs, and a grill stand which is positioned within the cooking chamber in order to hold the said grill above the cooking chamber at a specific height, and to which the grill is attached in a manner which permits it to revolve. The upper and lower grills which form the grill are connected by hinges and the thickness of the foodstuffs which can be positioned between the upper and lower grills can be selected according to the form of the upper and lower grills.

CN 202 303 513 U describes a cooking apparatus with a revolving grill which comprises two grill plates that are connected to each other by means of a connecting element.

US 5,410,948 A describes a cooking grill with a pair of rotatable food supporting racks. Each food supporting rack comprises two plates that are hinged together and that are coupled together by means of releasable clamps.

CN 102 028 416 A describes a grill with two grill plates that are hinged together. The grill plates are connected to each other by means of a connecting element.

US 4,452,131 A describes a food support device with a first and a second planar grill member. The grill members are connected to each other by means of clamping members.

The purpose of the invention is to introduce a revolving grill within a cooking chamber and a cooking apparatus equipped with a connecting element in order to lock together the upper and lower grills which form the said revolving grill.

The purpose of the invention is to introduce a cooking apparatus with a connecting element in order to provide adjustability in the distance between the upper and lower grills of the invention.

The invention is a cooking apparatus which includes a cooking chamber defined by a casing surrounded by an external carcass and a revolving grill comprising a lower grill and an upper grill each equipped with at least one grill bar, fitted with a bearing to permit it to revolve on its own access within the said cooking chamber. The revolving action can be achieved axially on a bearing spindle. Thus the said cooking apparatus includes at least one connecting element, attached by a shape fastening onto at least one grill bar on the lower and upper grill in order to connect the said lower grill and the upper grill to each other in a manner which permits them to be detachable, wherein the connecting element including at least one notch which at least partly encircles the grill bar and wherein the notches being at least three in number. The connecting elements can be formed into at least two corresponding notches to provide a shape fastening. Thus the lower grill and upper grill will be prevented from separating from each other while the revolving grill turns.

The said notch at least partially encircles the grill bar. Thus it ensures that when the grill bars are located in the notches, the lower grill and the upper grill are locked together.

At least three notches are provided. Thus, when the amount of space between the lower grill and the upper grill is required to be increased, the positions of the grill bars can be changed.

In a preferred embodiment of the invention, the said connecting element is constructed of a metal-based material. Thus, the connecting element is not affected by heat during cooking.

In a preferred embodiment of the invention, the said connecting element includes at least two arms which define a notch between them. Also in another preferred embodiment of the invention, there is a spring which directs the said arms toward each other. This ensures that connecting elements on grill bars of different thickness hold the bars sufficiently firmly.

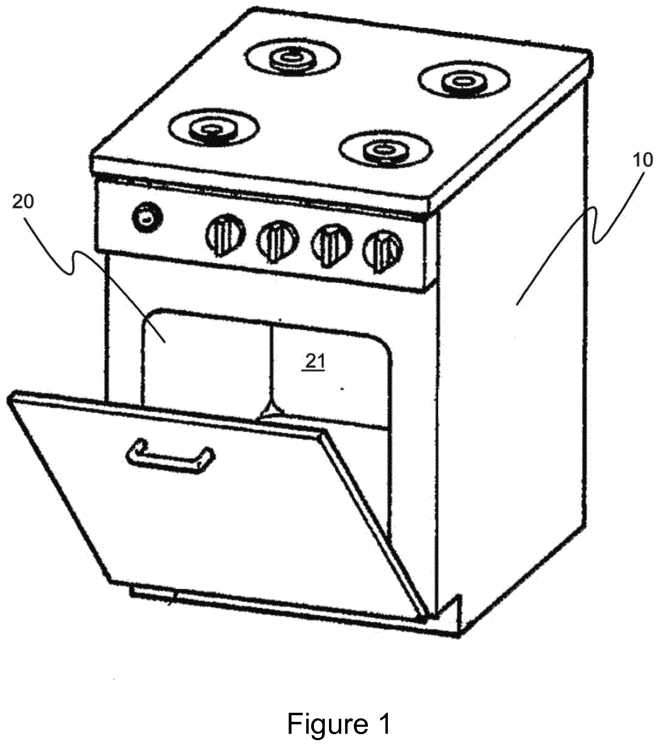

A representational view of the cooking apparatus which is the subject of the invention is provided in Figure 1.

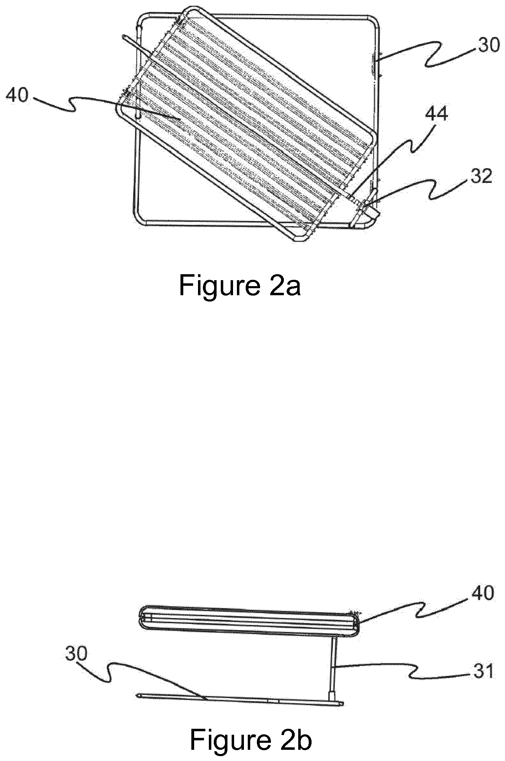

Representational views of the revolving grill of the cooking apparatus which is the subject of the invention is provided in Figures 2a and 2b.

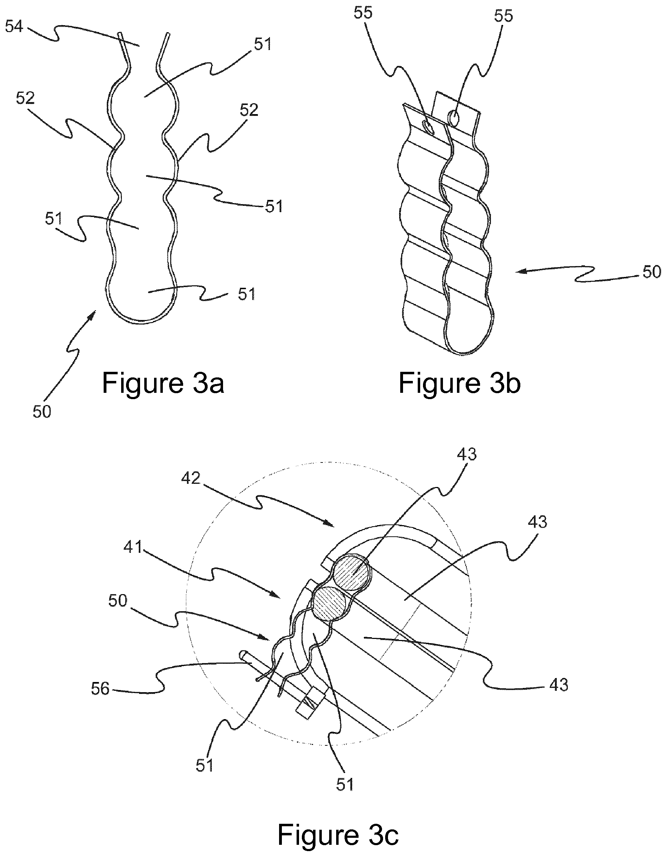

Representational views of the connecting element of the cooking apparatus which is the subject of the invention are provided in Figures 3a and 3b.

A representational view of the attachment of the connecting element of the cooking apparatus which is the subject of the invention to the lower grill and upper grill is provided in Figure 3c.

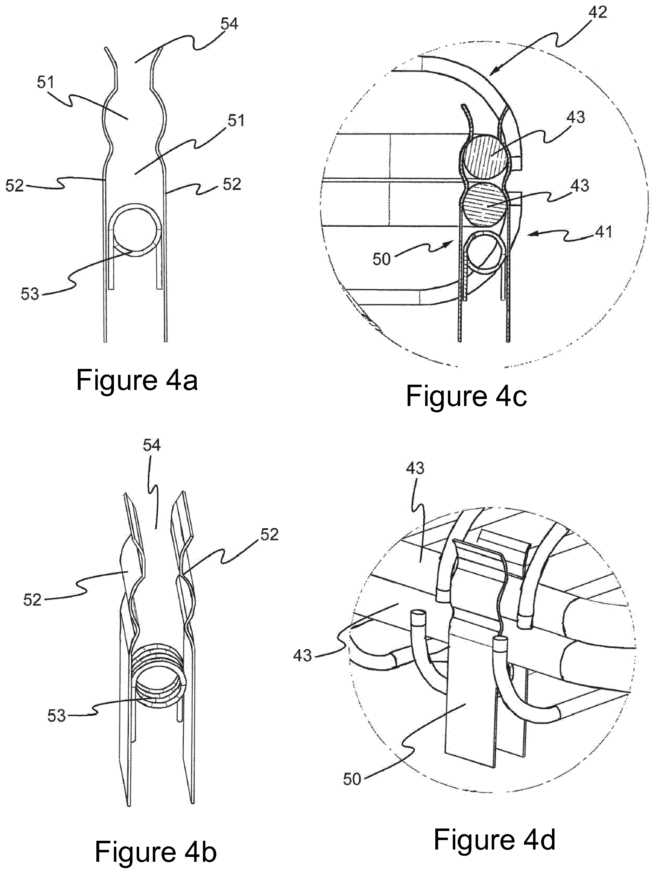

Representational views of an alternative connecting element of the cooking apparatus which is the subject of the invention are provided in Figures 4a and 4b.

A representational view of the attachment of the connecting element of the cooking apparatus which is the subject of the invention to the lower grill and upper grill is provided in Figures 4c and 4d.

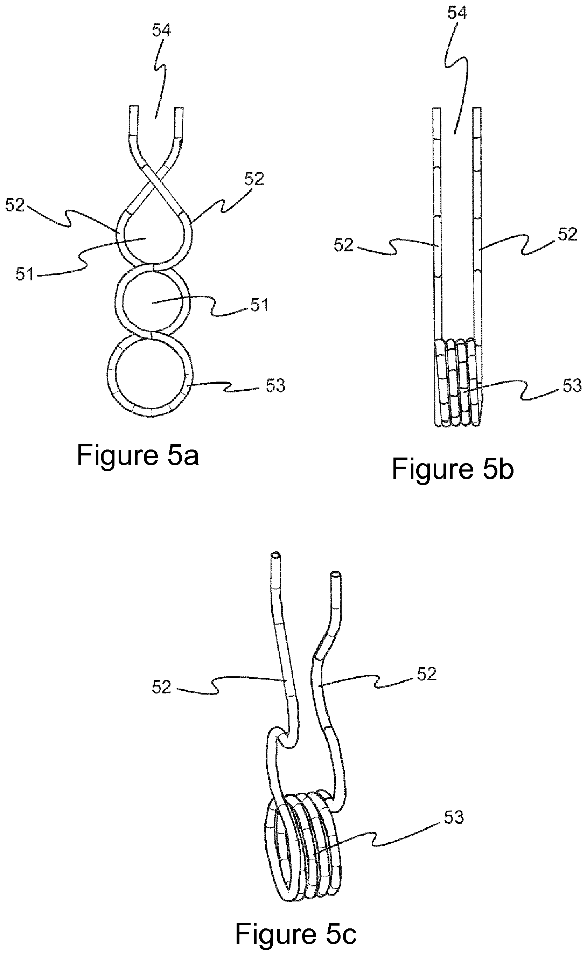

Representational views of another alternative connecting element of the cooking apparatus which is the subject of the invention are provided in Figures 5a, 5b and 5c.

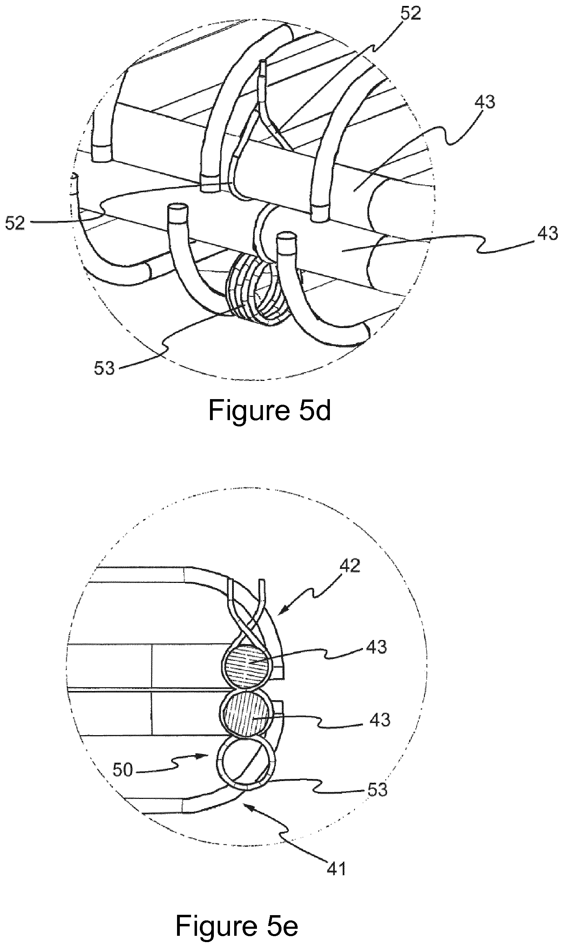

A representational view of the attachment of the connecting element of the cooking apparatus which is the subject of the invention to the lower grill and upper grill is provided in Figures 5d and 5e.

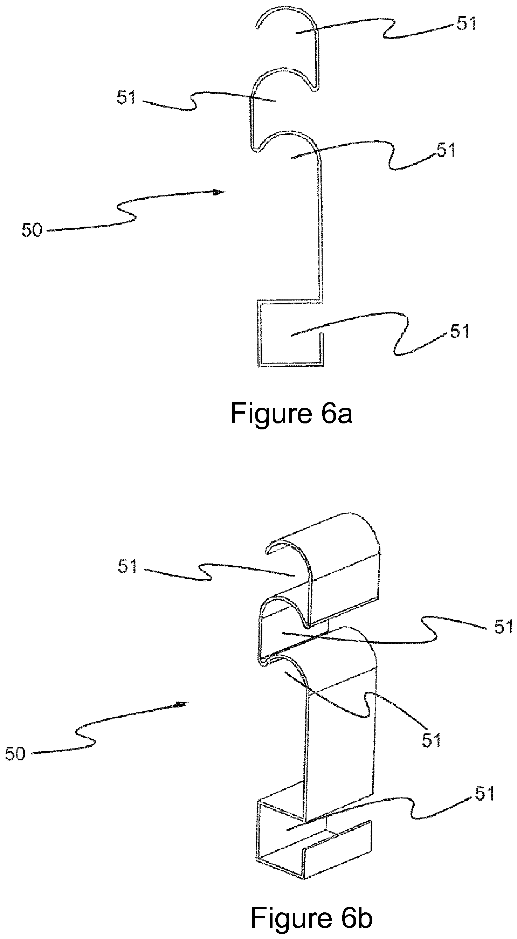

Representational views of another alternative connecting element of the cooking apparatus which is the subject of the invention are provided in Figures 6a and 6b.

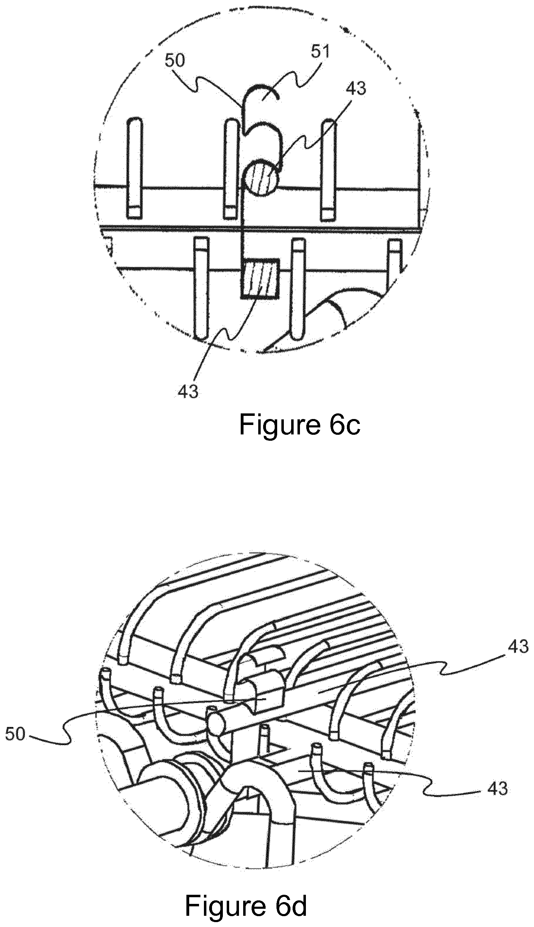

A representational view of the attachment of the connecting element of the cooking apparatus which is the subject of the invention to the lower grill and upper grill is provided in Figures 6c and 6d.

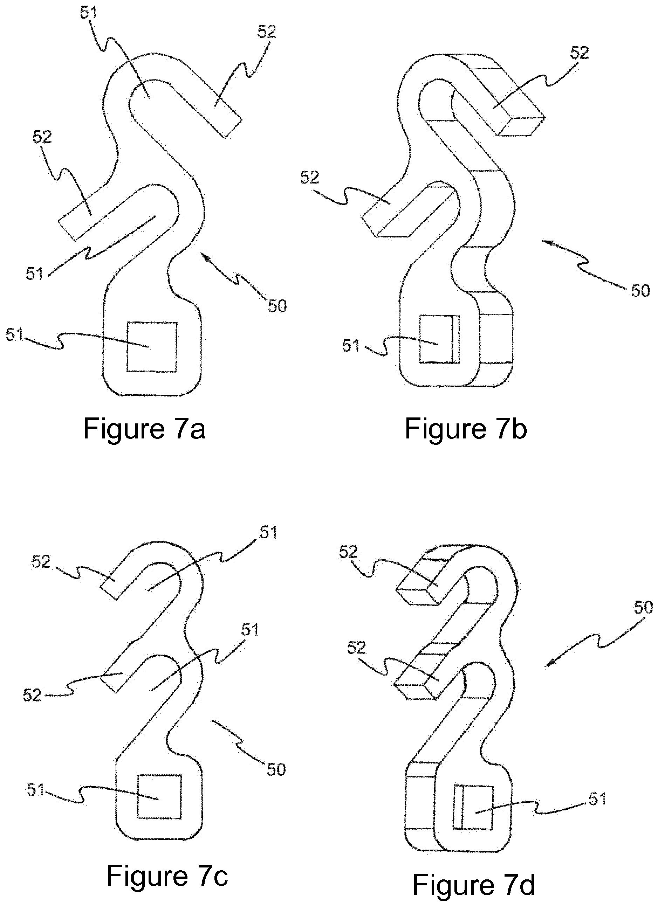

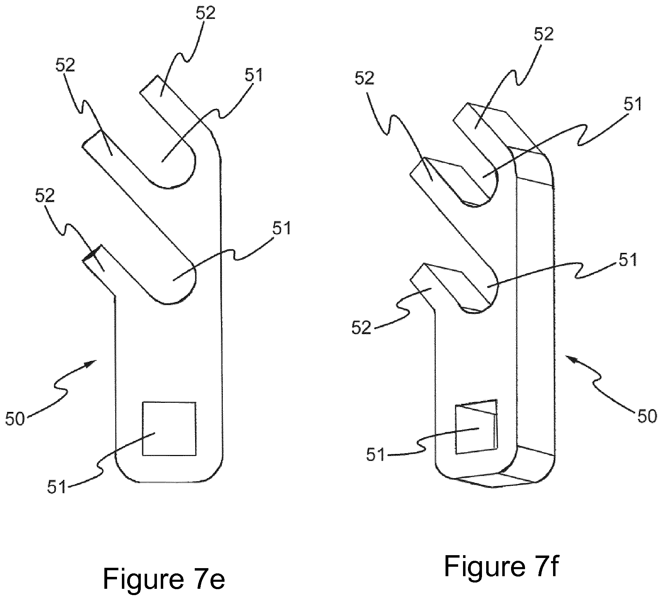

Representational views of another alternative connecting element of the cooking apparatus which is the subject of the invention are provided in Figures 7a, 7b, 7c, 7d, 7e and 7f.

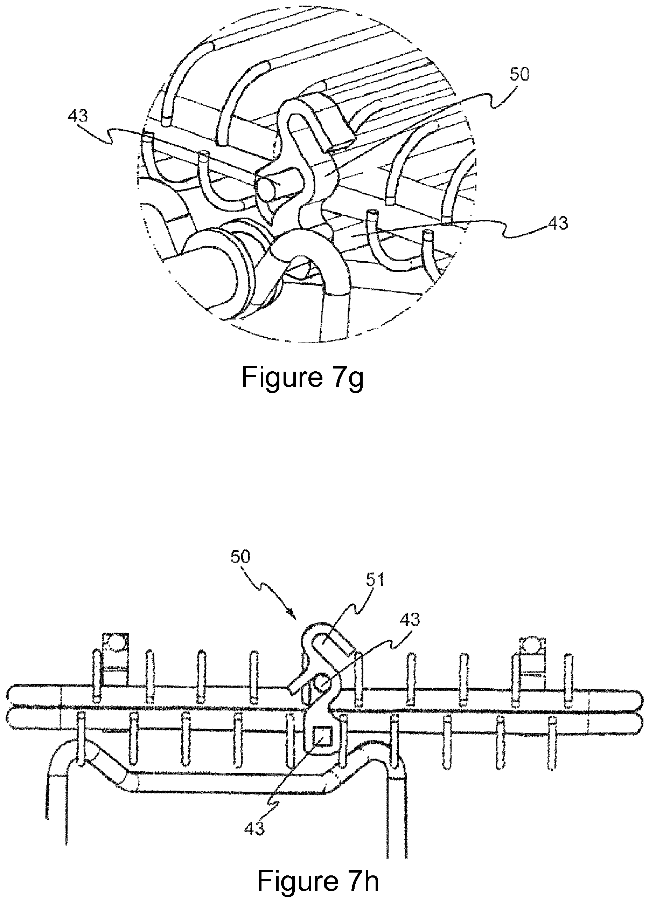

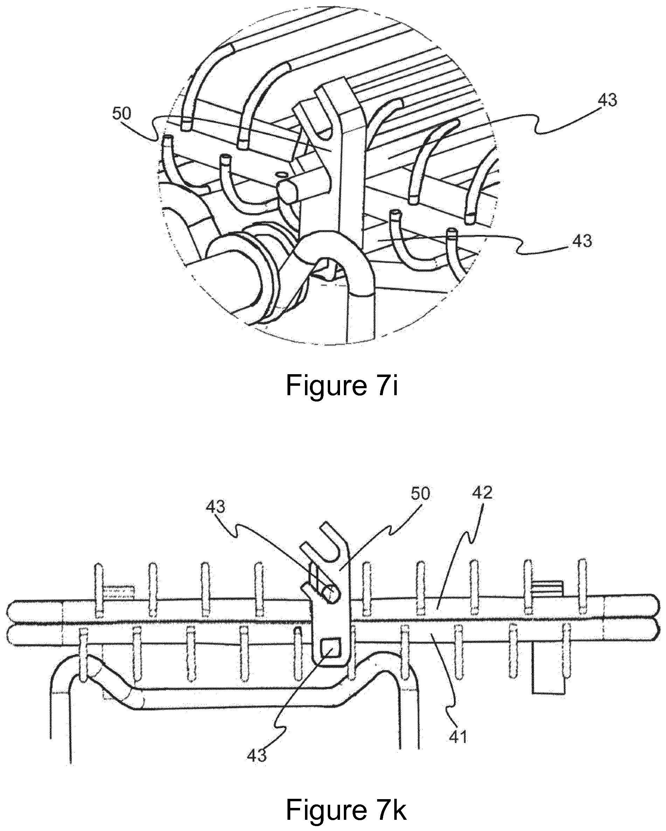

A representational view of the attachment of the connecting element of the cooking apparatus which is the subject of the invention to the lower grill and upper grill is provided in Figures 7g, 7h, 7i and 7k.

This detailed explanation of the revolving grill which is the subject of the invention is given only in order to explain the subject more clearly, and shall in no way be restrictive in its effect.

With reference to Figure 1: the cooking apparatus which is the subject of the invention has an outer carcass (10) and a casing (20) enclosed in the said outer carcass (10). The said casing (20) defines a cooking chamber (21). The revolving grill (40) shown in Figures 2a and 2b and the grill stand (30) which positions the said revolving grill (40) in a manner which ensures that it can revolve at a specific height are positioned within the said cooking chamber (21). In order to provide an attachment between the grill stand (30) and the revolving grill (40) there is a supporting arm (31) which extends between the grill stand (30) and the revolving grill (40). The revolving grill (40) is attached to a bearing (32) provided on the supporting arm (31) by means of a bearing spindle (44) provided on at least one side. The revolving grill (40) comprises at least one lower grill (41) and at least one upper grill (42) in a manner which defines between them a compartment within which foodstuffs which are to be cooked may be placed. The said lower grill (41) and upper grill (42) are attached to each other by at least one connecting element (50). Thus while the revolving grill (40) is revolving, separation of the lower grill (41) and the upper grill (42) is prevented, ensuring that the foodstuff being cooked is not spilled or dropped. The lower grill (41) and the upper grill (42) are produced by bringing together multiple grill bars (43) of various sizes and forms in such a way as to create spaces between them.

In the embodiment of the invention shown in Figures 3a and 3b, the said connecting element (50) is comprised of two arms (52) extending in a parallel fashion. The said arms (52) are formed in such a manner as to define at least two notches (51) between them. The arms (52) are structured symmetrically to create preferably circular notches (51). The connecting element (50) is preferably one-piece. The arms (52) are attached at one side but the other ends are free. Thus an access opening (54) is provided in the connecting element (50) for access into the notches (51) of the grill bar (43) which is to be attached. The arms (52) each have a locking aperture (55) on the access opening (54) side. As may be seen in Figure 3c, after the grill bars (43) of the lower grill (41) and the upper grill (42) have been located in the notches (51) in the connecting element (50), a locking pin (56) is fitted into the locking aperture (55) thereby ensuring that the connecting element (50) is fixed on the grill bars (43) in a manner which ensures that it will not come out. A threaded bolt can be used instead of the said locking pin (56). In a preferred embodiment of the invention there are more than two notches (51) created between the arms (52) by which the lower grill (41) and the upper grill (42) can be fixed to create a distance between them. Thus, when the food which is to be cooked does not fit between the lower grill (41) and the upper grill (42), the lower grill (41) and the upper grill (42) can be distanced from one another by using different notches (51) on the connecting element (50), thereby preventing the foodstuffs from being crushed or the grill bars (43) being deformed.

In an alternative embodiment of the connecting element (50) shown in Figures 4a and 4b, the arms are provided as two separate elements (52) attached to each other by a spring (53) between them. The said spring (53) is technically a twin armed spring which defines a torsion spring. Thus, the connecting element (50) has a shape like a clothes peg. As may be seen in Figures 4c and 4d, when the connecting element (50) is fitted onto the grill bars (43) of the lower grill (41) and the upper grill (42) it is fixed by means of force applied by the spring (53). Thus there is no requirement for an additional element to effect locking, and assembly can be conveniently achieved.

In an alternative embodiment of the connecting element (50) shown in Figures 5a, 5b and 5c, the arms (52) are structured by means of bending a one-piece wire. In the course of the said forming process the connecting part of the arms (52) are formed in a spiral fashion in order to produce a spring (53). The arms (52) have an S-like shape to define at least two notches (51) between them. In order to permit the connecting element (50) to be fitted to the lower grill (41) and the upper grill (42), it is fitted onto the grill bars (43) via the access opening (54) of the arms (52) shown in Figure 5b and then the connecting element (50) is turned in the direction in which the arms (52) stretch enabling the grill bars (43) to fit into the notches (51) as shown in Figures 5d and 5e.

In an alternative embodiment shown in Figures 6a and 6b, the one-piece connecting element (50) is formed in a manner by which it at least partially encircles the grill bars (43). In a preferred embodiment, the connecting element (50) is fitted by a square-shaped notch (51) at one end of it, over a grill bar (43) preferably in the lower grill (41) which corresponds to the form of the notch (51). As may be seen in Figures 6c and 6d, the notches (51) in the connecting element (50) are fitted to the grill bars (43) of the upper grill (42). The notch (51) in the connecting element (50) forms a fixing by at least partly encircling the grill bar (43).

As may be seen in Figures 7a to 7f, the connecting element (50) has a notch (51) which forms an attachment to, preferably, the lower grill (41). The attachment of the connecting element (50) to the upper grill (42) is accomplished by means of notches (51) created by the arms (52) extending in different directions. Thus the connecting element (50) fitted on one side to the lower grill (41) is also fixed to grill bars (43) of the upper grill (42) on the other side, thereby achieving a fixing.

In all of the said embodiments the lower grill (41) and the upper grill (42) are attached in a detachable fashion. The lower grill (41) and the upper grill (42) can be fitted in different positions enabling the positioning of foodstuffs of different thickness due to the notches (51) which are provided in multiple form. Also in the said embodiments, the connecting element (50) can additionally serve as a hinge.

### REFERENCE NUMBERS

- 10: External carcass
- 20: Casing
- 21: Cooking chamber

- 30: Grill stand
- 31: Supporting arm
- 32: Bearing

- 40: Revolving Grill
- 41: Lower grill
- 42: Upper grill
- 43: Grill bar
- 44: Bearing spindle

- 50: Connecting element
- 51: Notch
- 52: Arm
- 53: Spring
- 54: Access opening
- 55: Locking aperture
- 56: Locking pin

## Claims

1. A cooking apparatus which comprises an external carcass (10) enclosing a casing (20) to define a cooking chamber (21) and within the said cooking chamber (21) a revolving grill (40) comprising a lower grill (41) and an upper grill (42) each with at least one grill bar, fitted with a bearing and capable of revolving on its own axis, wherein, in order to permit the lower grill (41) and the upper grill (42) to be connected in a detachable fashion, it contains a connecting element (50) which is adapted to fit at least one grill bar each (43) located on the lower grill (41) and the upper grill (42), **characterised by** the connecting element (50) including at least one notch (51) which at least partly encircles the grill bar (43) and the notches (51) being at least three in number.

2. The cooking apparatus as claimed in claim 1, the said connecting element (50) being manufactured of a metal-based material.

3. The cooking apparatus as claimed in claim 1, in which the connecting element (50) includes at least two arms (52) which define a notch (51) between them.

4. The cooking apparatus as claimed in claim 3, including at least one spring (53) which directs the said arms (52) toward one another.

## Patentansprüche

1. Kochvorrichtung mit einem Außenkorpus (10), der ein einen Garraum (21) definierendes Gehäuse (20) umgibt, und einem drehbaren Grillrost (40) in dem Garraum (21), der einen unteren Grillrost (41) und einen oberen Grillrost (42) mit jeweils mindestens einem Grillroststab umfasst, mit einem Lager ausgestattet und um die eigene Achse drehbar ist, wobei der Grillrost, damit der untere Grillrost (41) und der obere Grillrost (42) auf lösbare Weise verbindbar sind, ein Verbindungselement (50) umfasst, das so ausgelegt ist, dass es jeweils auf mindestens einen Grillroststab (43) passt, der sich an dem unteren Grillrost (41) und dem oberen Grillrost (42) befindet,
**dadurch gekennzeichnet, dass** das Verbindungselement (50) mindestens eine Einbuchtung (51) aufweist, die den Grillroststab (43) zumindest teilweise umschließt, und die Anzahl der Einbuchtungen (51) mindestens drei beträgt.

2. Kochvorrichtung nach Anspruch 1, wobei das Verbindungselement (50) aus einem auf Metall basierenden Material hergestellt ist.

3. Kochvorrichtung nach Anspruch 1, bei der das Verbindungselement (50) mindestens zwei Arme (52) aufweist, die zwischen sich eine Einbuchtung (51) definieren.

4. Kochvorrichtung nach Anspruch 3, die mindestens eine Feder (53) aufweist, welche die Arme (52) zueinander hin führt.

## Revendications

1. Un appareil de cuisson qui comprend une carcasse externe (10) enfermant un boîtier (20) destiné à définir une chambre de cuisson (21) et à l'intérieur de ladite chambre de cuisson (21) un grill rotatif (40) comprenant un grill inférieur (41) et un grill supérieur (42), chacun d'eux avec au moins une barre de grill, équipé d'un roulement et capable de pivoter sur son propre axe, qui contient, afin de permettre au grill inférieur (41) et au grill supérieur (42) d'être raccordés de manière amovible, un élément de raccordement (50) qui est adapté de façon à recevoir au moins une barre de grill (43) placée sur le grill inférieur (41) et le grill supérieur (42), **caractérisé en ce que** l'élément de raccordement (50) comprend au moins une encoche (51) qui encercle au moins partiellement la barre de grill (43), les encoches (51) étant au moins au nombre de trois.

2. L'appareil de cuisson selon la revendication 1, ledit élément de raccordement (50) étant fabriqué à partir d'un matériau métallique.

3. L'appareil de cuisson selon la revendication 1, dans lequel l'élément de raccordement (50) comprend au moins deux bras (52) qui définissent une encoche (51) entre eux.

4. L'appareil de cuisson selon la revendication 3, comprenant au moins un ressort (53) qui dirige lesdits bras (52) l'un vers l'autre.
